# EUROPÄISCHE PATENTANMELDUNG

(11) **EP 2 620 826 A1**
(43) Veröffentlichungstag der Anmeldung: **31.07.2013**
(21) Anmeldenummer: 12152787.3
(22) Anmeldetag: 27.01.2012
(51) Int. Cl.: G05B 19/4097, H04L 9/00

(54) **Verfahren zum Generieren eines ausführbaren Computerprogramms für ein Automatisierungsgerät, insbesondere zum Ermitteln von Bewegungsdaten für eine Bearbeitungsmaschine**

(71) Anmelder: Siemens Aktiengesellschaft, 80333 München (DE)
(72) Erfinder: Hamm, Carsten, 91058 Erlangen (DE); Rosenberg, Jens Ansgar, 90459 Nürnberg (DE)

(57) **Zusammenfassung**

Die Erfindung betrifft ein Verfahren zum Ermitteln von Bewegungsdaten (18) für eine Bearbeitungsmaschine, wobei Geometriedaten (12) als Grundlage für eine Bewegung der Bearbeitungsmaschine an einer Bearbeitungsstation (10) lokal verschlüsselt und in eine Rechnerwolke (16) eingespeist werden, wobei innerhalb der Rechnerwolke (16) die Bewegungsdaten (18') für eine Bewegung der Bearbeitungsmaschine aufgrund der verschlüsselten Geometriedaten (12') ermittelt werden, wobei die Bewegungsdaten (18') aus der Cloud (16) an eine Bearbeitungsstation (10) oder die Bearbeitungsstation (10) übermittelt werden und wobei die Bewegungsdaten (18') mit dem bei der Verschlüsselung der Geometriedaten (12') verwendeten Schlüssel (14) entschlüsselt werden.

## Beschreibung

Die vorliegende Erfindung betrifft ein Verfahren zum Ermitteln von Bewegungsdaten für eine Bearbeitungsmaschine in Form von oder nach Art einer Werkzeugmaschine, eines Roboters oder dergleichen.

Verfahren zum Ermitteln von Bewegungsdaten für eine Bearbeitungsmaschine, wie zum Beispiel eine Werkzeugmaschine, sind allgemein bekannt. Grundlage für die Ermittlung solcher Bewegungsdaten bilden üblicherweise Geometriedaten, zum Beispiel Geometriedaten eines zu bearbeitenden Werkstücks. Anhand solcher Geometriedaten werden für Werkzeugmaschinen und Roboter Bahnplanungsalgorithmen und dergleichen eingesetzt, um Bewegungsbahnen zu ermitteln, die der jeweiligen Kinematik der Bearbeitungsmaschine Rechnung tragen und mit denen sich das Werkstück herstellen lässt, zum Beispiel mit Fräs- und Schleifvorgängen, Bestückungsvorgängen bei Leiterplatten, Montagevorgängen, und so weiter.

Allerdings können die jeweils zugrunde liegenden Geometriedaten grundsätzlich geheimhaltungsbedürftige Daten darstellen oder umfassen. Zum Beispiel könnte ein Dritter, der in den Besitz von Geometriedaten für ein nach diesen Daten durch Fräsen, Bohren, Schleifen und so weiter hergestelltes Werkstück gelangt, Werkstücke herstellen, die den von dem Eigentümer der Geometriedaten hergestellten Werkstücken identisch entsprechen. Deshalb kommt eine Weitergabe solcher Geometriedaten an Dritte nur in Ausnahmefällen in Betracht.

Obwohl die unter dem Fachbegriff Cloud Computing zusammengefasste Thematik die Datenverarbeitung revolutioniert, können viele Anwendungen und darunter speziell auch das Ermitteln von Bewegungsdaten für eine Bearbeitungsmaschine aufgrund der Vertraulichkeit der zu verarbeitenden Daten nicht in die in der Fachterminologie als Cloud bezeichnete Rechnerwolke, also einen Zusammenschluss von in einem Netzwerk erreichbaren Rechnern, ausgelagert werden. Zu groß ist die Furcht vor dem Missbrauch der Daten. Dies trifft in besonderem Maße auf die Automatisierungstechnik zu, wo das Know How in den Daten und Programmen der Steuerungskomponenten konzentriert ist.

Die Verarbeitung kritischer Daten und damit speziell die Verarbeitung von Geometriedaten zum Ermitteln von Bewegungsdaten für eine Bearbeitungsmaschine erfolgt heute in abgeschirmter und bekannter IT-Umgebung. Diese schützt sensible Daten vor Missbrauch, Diebstahl oder Sabotage. Daten und Programme für Fertigungs- und/oder produktionstechnische Anlagen und Maschinen werden dementsprechend in lokalen Netzen und Speicherressourcen gehalten. Zumeist erfolgt dabei die Ablage sogar in verschlüsselter Form. Die Verarbeitung, insbesondere eine Verarbeitung nach den unter dem Schlüsselwort CAx bekannten Methoden, also zum Beispiel CAE - Computer Aided Engineering, CAM - Computer Aided Manufacturing, CAP - Computer Aided Production und so weiter, erfolgt auf lokalen Rechnern. Nur so kann in der gegenwärtigen Situation die Vertraulichkeit der verwendeten Daten gewährleistet werden.

Eine Aufgabe der Erfindung besteht ausgehend von der oben skizzierten Problematik darin, ein Verfahren zum Ermitteln von Bewegungsdaten für eine Bearbeitungsmaschine der eingangs genannten Art anzugeben, das von den Möglichkeiten des sogenannten Cloud Computings profitieren kann.

Diese Aufgabe wird mit einem Verfahren mit den Merkmalen des Anspruchs 1 gelöst. Dazu ist bei einem Verfahren zum Ermitteln von Bewegungsdaten für eine Bearbeitungsmaschine vorgesehen, dass insbesondere Geometriedaten als Grundlage für eine Bewegung der Bearbeitungsmaschine an einer Bearbeitungsstation lokal verschlüsselt und in eine im Folgenden entsprechend der gebräuchlichen Fachterminologie als Cloud bezeichnete Rechnerwolke eingespeist werden, dass innerhalb der Rechnerwolke die Bewegungsdaten für eine Bewegung der Bearbeitungsmaschine aufgrund der verschlüsselten Geometriedaten ermittelt werden, dass die Bewegungsdaten aus der Cloud an eine Bearbeitungsstation oder die Bearbeitungsstation, die die verschlüsselten Daten in die Cloud gegeben hatte, übermittelt werden und dass die Bewegungsdaten mit dem bei der Verschlüsselung der Geometriedaten verwendeten Schlüssel entschlüsselt werden.

Der Begriff Geometriedaten umfasst hier und im Folgenden zumindest solche Daten, die ein zu bearbeitendes oder herzustellendes Werkstück und/oder einen Bewegungsablauf, wie zum Beispiel beim Bestücken einer Leiterplatte, beschreiben. Die Geometriedaten können darüber hinaus auch Daten umfassen, die eine jeweilige Kinematik der Bearbeitungsmaschine beschreiben, also zum Beispiel Art und Anzahl der von der Bearbeitungsmaschine umfassten Achsen. Die Geometriedaten können des Weiteren auch spezielle Bahnplanungsalgorithmen umfassen, um besondere geometrische oder kinematische Möglichkeiten oder Beschränkungen der Bearbeitungsmaschine zu erfassen. Als Bearbeitungsstation kommen ein Rechner in Form von oder nach Art eines sogenannten Personalcomputers oder eine Steuerungseinrichtung der Bearbeitungsmaschine in Betracht. Hinsichtlich derjenigen Bearbeitungsstation, die die Geometriedaten als Grundlage für eine Bewegung der Bearbeitungsmaschine lokal verschlüsselt und anschließend verschlüsselt in die Cloud einspeist, kommt zum Beispiel ein solcher Rechner in Betracht, insbesondere wenn auf diesem Rechner zum Beispiel mit einer CAD-Umgebung ein Design des jeweils zu bearbeitenden oder herzustellenden Werkstücks erfolgt und damit insofern die Geometriedaten oder ein Teil der Geometriedaten unmittelbar zur Verfügung stehen. Als Bearbeitungsstation, an die später die Bewegungsdaten aus der Cloud übermittelt werden, kommt die gleiche Bearbeitungsstation, aber zum Beispiel auch eine Steuerungseinrichtung für die jeweilige Bearbeitungsmaschine, in Betracht, wenn die in der Cloud ermittelten Bewegungsdaten unmittelbar an die Bearbeitungsmaschine übertragen werden. Wenn die einspeisende Bearbeitungsstation und die Bearbeitungsstation, die die in der Cloud ermittelten Bewegungsdaten erhält, auseinanderfallen, ist es ausreichend, wenn der in Zusammenhang mit dem Einspeisen der Geometriedaten in die Cloud verwendete Schlüssel lokal an die als Empfänger fungierende Bearbeitungsstation übermittelt wird.

Der Vorteil der Erfindung besteht darin, dass die Ermittlung von Bewegungsdaten für eine Bearbeitungsmaschine in die Cloud ausgelagert werden kann, ohne dass Bedenken hinsichtlich eines eventuellen Missbrauchs, Diebstahls oder einer Sabotage der verwendeten Daten bestehen müssen. Die Auslagerung von ressourcenintensiven Bearbeitungs- und Rechenvorgängen in die Cloud hat den Vorteil, dass dort nahezu unbegrenzt entsprechende Ressourcen zur Verfügung stehen und dynamisch und bedarfsgerecht genutzt werden können. Die insoweit verwendeten Ressourcen brauchen lokal nicht bereitgestellt zu werden, so dass lokal eine Hardware mit einem geringeren Leistungsumfang ausreicht. Schließlich ergibt sich auch noch ein Vorteil hinsichtlich des örtlich ungebundenen Zugriffs.

Vorteilhafte Ausgestaltungen der Erfindung sind Gegenstand der Unteransprüche. Dabei verwendete Rückbeziehungen weisen auf die weitere Ausbildung des Gegenstandes des Hauptanspruches durch die Merkmale des jeweiligen Unteranspruches hin. Sie sind nicht als ein Verzicht auf die Erzielung eines selbständigen, gegenständlichen Schutzes für die Merkmalskombinationen der rückbezogenen Unteransprüche zu verstehen. Des Weiteren ist im Hinblick auf eine Auslegung der Ansprüche bei einer näheren Konkretisierung eines Merkmals in einem nachgeordneten Anspruch davon auszugehen, dass eine derartige Beschränkung in den jeweils vorangehenden Ansprüchen nicht vorhanden ist.

Der hier vorgestellte Ansatz eignet sich auch für andere rechenzeitintensive Vorgänge im Bereich der Automatisierung technischer Prozesse. Insofern kann als allgemeine Aufgabe auch angesehen werden, ein Verfahren zur Bearbeitung von Daten, wie sie im Bereich der Automatisierung technischer Prozesse anfallen, anzugeben, das von den Möglichkeiten des sogenannten Cloud Computings profitieren kann. Als Beispiel für derartige Daten, die im Bereich der Automatisierung technischer Prozesse anfallen, sind insbesondere Steuerungsprogramme, mit denen eine Automatisierung eines technischen Prozesses bewerkstelligt wird, zu nennen. Rechenzeitintensiv ist dabei speziell die Umsetzung von Programmcodedaten in einem Quell- oder Zwischencode in ein ausführbares Computerprogramm, also insbesondere ein Datenumsetzung wie sie ein sogenannter Compiler vornimmt. Die Programmcodedaten sind dabei sensible Daten, die der Ersteller eines solchen Programmcodes nicht ohne weiteres aus der Hand geben möchte. Indem die Programmcodedaten lokal verschlüsselt und in verschlüsselter Form in eine Rechnerwolke eingespeist werden, braucht nicht befürchtet werden, dass das ion den Programmcode eingeflossene Know-How mit dem Einspeisen in die Rechnerwolke Dritten zugänglich wird. Innerhalb der Rechnerwolke können dann anhand der verschlüsselten Programmcodedaten Daten für ein ausführbares Computerprogramm ermittelt werden. Diese Daten werden abschließend an einen Empfänger, insbesondere die ursprünglich anfragende Station zurück übermittelt. Dort werden die Daten für ein ausführbares Computerprogramm mit dem bei der Verschlüsselung der Programmcodedaten verwendeten Schlüssel entschlüsselt um ein ausführbares Computerprogramm zu erhalten werden.

Die nachfolgende Beschreibung wird für den zunächst im Vordergrund stehenden Aspekt der Ermittlung von Bewegungsdaten für eine Bearbeitungsmaschine fortgesetzt. Eingedenk der oben erläuterten Möglichkeit zur Verallgemeinerung des hier beschriebenen Ansatzes kann in der nachfolgenden Beschreibung der Begriff Geometriedaten durch Programmcodedaten und der Begriff Bewegungsdaten durch den Begriff Daten für ein ausführbares Computerprogramm bzw. ausführbares Computerprogramm ersetzt werden. Bei einer noch weitergehenden Verallgemeinerung kommt auch in Betracht andere Daten als Bewegungsdaten oder Computerprogrammdaten in der Cloud ermitteln oder bearbeiten zu lassen. Gemeinsam ist dem Ansatz jeweils, dass die jeweiligen Basisdaten, also Geometriedaten, Programmcodedaten oder zum Beispiel Rezeptdaten oder dergleichen, lokal mit einem nur lokal benötigten Schlüssel verschlüsselt und in verschlüsselter Form in die Cloud gegeben werden. In der Cloud werden die Basisdaten in verschlüsselter Form bearbeitet und als Resultat ergeben sich zum Beispiel verschlüsselte Bewegungsdaten, verschlüsselte Daten für ein ausführbares Computerprogramm oder verschlüsselte Rezeptdaten. Nach der Berechnung/Bearbeitung in der Cloud wird das jeweilige Ergebnis in nach wie vor verschlüsselter Form an einen Empfänger, insbesondere die ursprünglich anfragende Station, zurückgegeben. Erst dort erfolgt mit dem ursprünglich verwendeten Schlüssel, der zu keinem Zeitpunkt in die Cloud übermittelt wird oder gar in der Cloud bekannt sein muss, die Entschlüsselung und mit der Entschlüsselung liegen lokal die Bewegungsdaten, das ausführbare Computerprogramm oder Rezeptdaten oder dergleichen vor.

Bei einer besonderen Ausführungsform des Verfahrens ist vorgesehen, dass die Geometriedaten oder sonstigen Basisdaten im Bereich der Cloud zum Erhalt von Bewegungsdaten oder dergleichen mit einem homomorphen Algorithmus oder homomorphen Algorithmen bearbeitet werden. Der Vorteil dieses Aspekts der Erfindung besteht in der Verwendung neuartiger Algorithmen, nämlich einem homomorphen Algorithmus oder homomorpher Algorithmen. Die sogenannte homomorphe Datenverarbeitung, also die Verwendung eines oder mehrerer entsprechender Algorithmen, bietet eine technische Möglichkeit, die Datensicherheit zu erhöhen. Dabei müssen die verschlüsselten Daten vor der Weiterverarbeitung in der Cloud oder für die Weiterverarbeitung in der Cloud nicht mehr entschlüsselt werden. Die Algorithmen können direkt auf den verschlüsselten Daten rechnen. Die Ergebnisse sind ebenfalls verschlüsselt. Deshalb können die als Grundlage für die Ermittlung der Bewegungsdaten fungierenden Geometriedaten lokal verschlüsselt und in verschlüsselter Form in die Cloud eingespeist werden. Die externe Be- und Verarbeitung der Geometriedaten erfolgt ausschließlich in Bezug auf die so verschlüsselten Geometriedaten. Erst die jeweils als Empfänger der in der Cloud ermittelten Bewegungsdaten fungierende Bearbeitungsstation nimmt eine Entschlüsselung der erhaltenen Bewegungsdaten vor und verwendet dabei den ursprünglich bei der Verschlüsselung der Geometriedaten verwendeten Schlüssel.

Die oben genannte Aufgabe wird auch mit einer Bearbeitungsstation der oben genannten Art gelöst, die nach dem Verfahren wie hier und im Folgenden beschrieben arbeitet und dazu Mittel zur Durchführung des Verfahrens umfasst. Die Erfindung ist dabei in Software implementiert. Die Erfindung ist damit einerseits auch ein Computerprogramm mit durch einen Computer ausführbaren Programmcodeanweisungen und andererseits ein Speichermedium mit einem derartigen Computerprogramm sowie schließlich auch eine Steuerungseinrichtung oder ein Antriebssystem, in dessen Speicher als Mittel zur Durchführung des Verfahrens und seiner Ausgestaltungen ein solches Computerprogramm geladen oder ladbar ist.

Der Vorteil der Erfindung und ihrer Ausgestaltungen besteht damit insbesondere darin, dass die Möglichkeiten der Datenverarbeitung in der Cloud auch für automatisierungstechnische Aufgaben, nämlich insbesondere die Ermittlung von Bewegungsdaten für eine Bearbeitungsmaschine, genutzt werden können. Rechenintensive Aufgaben oder Teilaufgaben einer automatisierungstechnischen Anwendung können sich jetzt der Infrastruktur und der Ressourcen der Cloud bedienen. Die Verarbeitung großer Datenmengen, wie sie beim sogenannten Post- oder Preprocessing von NC-Teileprogrammen üblich sind, lässt sich in die Cloud auslagern. Eine Bemessung lokal notwendiger Rechenkapazitäten muss sich nicht mehr an einer eventuell zu erwartenden Spitzenlast orientieren und die Automatisierungskomponenten können hinsichtlich Rechenleistung und Speicherkapazität deutlich kleiner dimensioniert werden. Die Verschlüsselung der Daten stellt die Vertraulichkeit sicher, so dass der Ort der Bearbeitung der Daten unerheblich ist und damit ohne weiteres auch eine Bearbeitung sensibler Daten in der Cloud in Betracht kommt.

Nachfolgend wird ein Ausführungsbeispiel der Erfindung anhand der Zeichnung näher erläutert. Einander entsprechende Gegenstände oder Elemente sind in allen Figuren mit den gleichen Bezugszeichen versehen. Das oder jedes Ausführungsbeispiel ist nicht als Einschränkung der Erfindung zu verstehen. Vielmehr sind im Rahmen der vorliegenden Offenbarung zahlreiche Abänderungen und Modifikationen möglich, insbesondere solche Varianten und Kombinationen, die zum Beispiel durch Kombination oder Abwandlung von einzelnen in Verbindung mit den im allgemeinen oder speziellen Beschreibungsteil beschriebenen sowie in den Ansprüchen und/oder der Zeichnung enthaltenen Merkmalen bzw. Elementen oder Verfahrensschritten für den Fachmann im Hinblick auf die Lösung der Aufgabe entnehmbar sind und durch kombinierbare Merkmale zu einem neuen Gegenstand oder zu neuen Verfahrensschritten bzw. Verfahrensschrittfolgen führen.

Es zeigen
- FIG 1: eine schematisch vereinfachte Darstellung eines Verfahrens zum Ermitteln von Bewegungsdaten unter Ausnutzung der Möglichkeiten des sogenannten Cloud Computings und
- FIG 2: eine vereinfachte Darstellung einer Bearbeitung verschlüsselter Daten in der Cloud mit einem homomorphen Algorithmus.

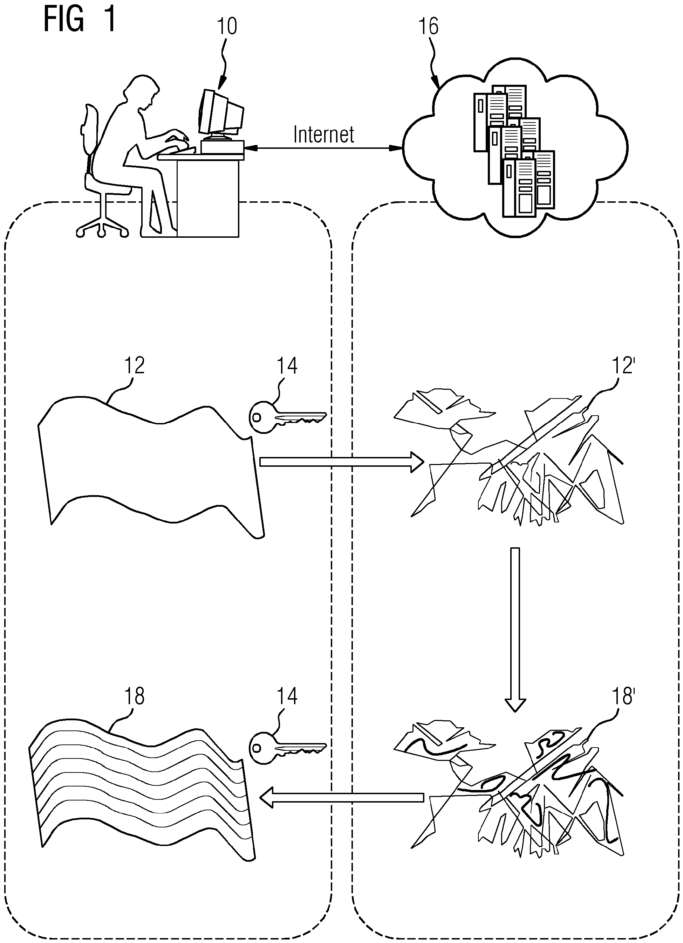

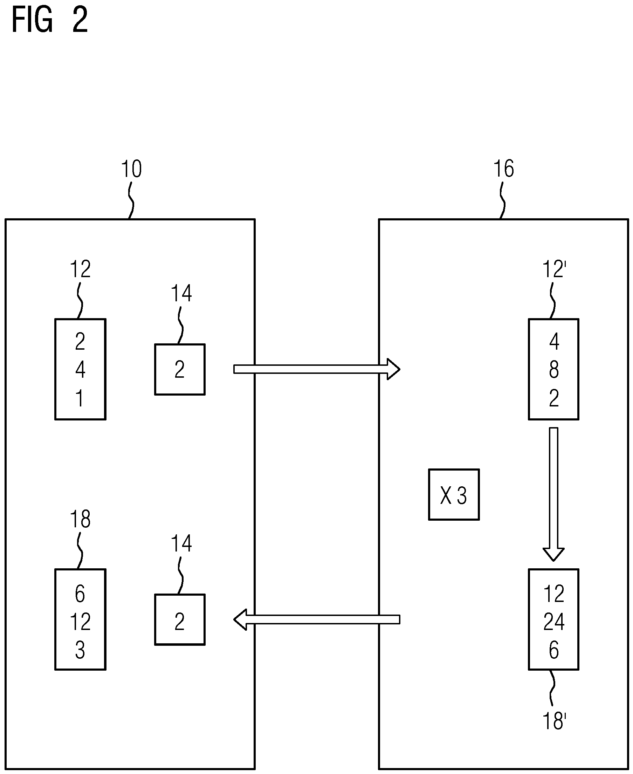

FIG 1 zeigt schematisch vereinfacht das hier vorgeschlagene Verfahren zum Ermitteln von Bewegungsdaten für eine selbst nicht dargestellte Bearbeitungsmaschine, nämlich zum Beispiel eine Werkzeugmaschine, einen Roboter oder dergleichen. An einer Bearbeitungsstation 10, nämlich zum Beispiel einem CAD-Arbeitsplatz, erstellt ein Ingenieur ein CAD-Design eines mit der Bearbeitungsmaschine zu bearbeitenden oder herzustellenden Werkstücks. Resultierende Geometriedaten 12 werden lokal mit einem Schlüssel 14 verschlüsselt und werden als Grundlage für eine zu ermittelnde Bewegung der Bearbeitungsmaschine in eine Rechnerwolke/Cloud 16 eingespeist (das Einspeisen ist mit dem nach rechts gerichteten Blockpfeil dargestellt). Die Verbindung zwischen der lokalen Bearbeitungsstation 10 und der Cloud 16 besteht dabei insbesondere über das Internet. In der Cloud 16 liegen die ursprünglichen Geometriedaten 12 nur in verschlüsselter Form vor (verschlüsselte Geometriedaten 12') Innerhalb der Cloud 16 werden aufgrund der verschlüsselten Geometriedaten 12' Bewegungsdaten 18 für die Bearbeitungsmaschine ermittelt. Die Ermittlung der Bewegungsdaten 18 erfolgt dabei auf Basis der verschlüsselten Geometriedaten 12', insbesondere unter Verwendung eines homomorphen Algorithmus oder homomorpher Algorithmen (FIG 2), so dass die auf Basis der verschlüsselten Geometriedaten 12' ermittelten Bewegungsdaten zunächst noch innerhalb der Cloud 16 als verschlüsselte Bewegungsdaten 18' vorliegen. Die Ermittlung der verschlüsselten Bewegungsdaten 18' auf Basis der verschlüsselten Geometriedaten 12' ist durch den abwärts gerichteten Blockpfeil dargestellt. Die verschlüsselten Bewegungsdaten 18' sind dabei mit dem selben, aber in der Cloud 16 nicht bekannten Schlüssel 14 verschlüsselt, der bei der Verschlüsselung der zugrunde liegenden Geometriedaten 12 zum Erhalt der verschlüsselten Geometriedaten 12' verwendet wurde. Das Ergebnis der Bearbeitung der verschlüsselten Geometriedaten 12' in der Cloud 16 sind jedenfalls verschlüsselte Bewegungsdaten 18'. Die verschlüsselten Bewegungsdaten 18' werden wieder an die ursprüngliche Bearbeitungsstation 10 oder eine andere Bearbeitungsstation, wie zum Beispiel eine Steuerungseinrichtung einer Bearbeitungsmaschine, für die die Bewegungsdaten 18 bestimmt sind, übermittelt. Auf Seiten der jeweiligen Bearbeitungsstation 10 erfolgt lokal eine Entschlüsselung der verschlüsselten Bewegungsdaten 18'. Beim Entschlüsseln wird der gleiche Schlüssel 14 verwendet, der zuvor beim Verschlüsseln der Geometriedaten 12 verwendet wurde. Das Ergebnis sind lokal vorliegende, entschlüsselte Bewegungsdaten 18, die weiter bearbeitet oder an eine Steuerungseinrichtung einer Bearbeitungsmaschine übermittelt werden können. Die Übermittlung der verschlüsselten Bewegungsdaten 18' an die Bearbeitungsstation 10 ist durch den nach links gewandten Blockpfeil dargestellt.

Bei den Bewegungsdaten 18, 18' in verschlüsselter und/oder entschlüsselter Form kann es sich entweder um Bewegungsdaten 18, 18' auf Basis der zugrunde liegenden Geometriedaten 12, 12' oder um eine Kombination solcher Bewegungsdaten mit den zugrunde liegenden Geometriedaten 12, 12' handeln.

FIG 2 versucht abschließend eine schematisch vereinfachte und mathematisch simplifizierte Darstellung einer Bearbeitung der verschlüsselten Daten 12' in der Cloud 16 mit homomorphen Algorithmen. Der auf der linken Seite in FIG 2 dargestellte Block repräsentiert die Bearbeitungsstation 10. Entsprechend repräsentiert der auf der rechten Seite dargestellte Block die Cloud 16. Der Vektor (2, 4, 1) steht als Beispiel für die Geometriedaten 12 oder ein Datum innerhalb der Geometriedaten 12. Der Faktor 2 steht als Beispiel für den Schlüssel 14. Mit Verwendung dieses Schlüssels 14 ergeben sich auf Seiten der Cloud 16 die verschlüsselten Geometriedaten 12' oder das Datum innerhalb der verschlüsselten Geometriedaten als Vektor mit den Werten (4, 8, 2). Als Beispiel für die Ermittlung der Bewegungsdaten, also zunächst der verschlüsselten Bewegungsdaten 18' innerhalb der Cloud 16, ist eine Multiplikation mit dem Faktor 3 dargestellt. Danach ergeben sich als verschlüsselte Bewegungsdaten 18' oder als Datum der verschlüsselten Bewegungsdaten 18' der Vektor (12, 24, 6). Die Entschlüsselung der verschlüsselten Bewegungsdaten 18' erfolgt unter Verwendung des bei der Verschlüsselung der zugrunde liegenden Geometriedaten 12 verwendeten Schlüssels 14, hier also in Form einer Division durch 2. Als resultierende Bewegungsdaten 18 oder als Datum der resultierenden Bewegungsdaten 18 ergibt sich damit der Vektor (6, 12, 3). Anhand der zugrunde liegenden Geometriedaten 12, nämlich dem Vektor (2,4 1), kann leicht nachvollzogen werden, dass die resultierenden Bewegungsdaten 18 genau den zugrunde liegenden Geometriedaten 12 mit der in der Cloud 16 durchgeführten Operation, nämlich der Multiplikation mit dem Faktor 3, entsprechen, obwohl in der Cloud 16 zu keinem Zeitpunkt die entschlüsselten Geometriedaten 12 oder die resultierenden entschlüsselten Bewegungsdaten 18 vorgelegen haben.

Auch wenn diese Beschreibung nur ein stark vereinfachtes Beispiel darstellt, sollten auf diese Weise die grundsätzlichen Prinzipien deutlich geworden sein. Ein einem homomorphen Algorithmus zugrunde liegender Homomorphismus ist eine strukturerhaltende Abbildung und die bei der Erläuterung anhand von FIG 2 verwendete Multiplikation ist ebenfalls eine solche strukturerhaltende Abbildung.

## Patentansprüche

1. Verfahren zum Ermitteln von Bewegungsdaten (18) für eine Bearbeitungsmaschine, wobei Geometriedaten (12) als Grundlage für eine Bewegung der Bearbeitungsmaschine an einer Bearbeitungsstation (10) lokal verschlüsselt und in eine Rechnerwolke (16) eingespeist werden, wobei innerhalb der Rechnerwolke (16) die Bewegungsdaten (18') für eine Bewegung der Bearbeitungsmaschine aufgrund der verschlüsselten Geometriedaten (12') ermittelt werden, wobei die Bewegungsdaten (18') aus der Rechnerwolke (16) an eine Bearbeitungsstation (10) oder die Bearbeitungsstation (10) übermittelt werden und wobei die Bewegungsdaten (18') mit dem bei der Verschlüsselung der Geometriedaten (12') verwendeten Schlüssel (14) entschlüsselt werden.

2. Verfahren zum Generieren eines ausführbaren Computerprogramms für ein Automatisierungsgerät aus einem in einer Quell- oder Zwischensprache vorliegenden Programmcodedaten, wobei die Programmcodedaten lokal verschlüsselt und in eine Rechnerwolke (16) eingespeist werden, wobei innerhalb der Rechnerwolke (16) anhand der verschlüsselten Programmcodedaten Daten für ein ausführbares Computerprogramm ermittelt werden, wobei die Daten für ein ausführbares Computerprogramm aus der Rechnerwolke (16) an eine Bearbeitungsstation (10) oder die Bearbeitungsstation (10) übermittelt werden und wobei Daten für ein ausführbares Computerprogramm mit dem bei der Verschlüsselung der Programmcodedaten verwendeten Schlüssel (14) entschlüsselt werden.

3. Verfahren nach Anspruch 1 oder 2, wobei die verschlüsselten Geometriedaten (12') bzw. Programmcodedaten während einer Bearbeitung innerhalb der Rechnerwolke (16) für einen Erhalt der Bewegungsdaten (18') nicht entschlüsselt werden.

4. Verfahren nach Anspruch 1, 2 oder 3, wobei der zur Verund Entschlüsselung der Geometriedaten (12') bzw. Programmcodedaten verwendete Schlüssel (14) zu keinem Zeitpunkt in die Rechnerwolke (16) übermittelt wird.

5. Verfahren nach einem der Ansprüche 1, 3 oder 4, wobei eine Steuerungseinrichtung für eine Bearbeitungsmaschine als Bearbeitungsstation (10), an welche die Bewegungsdaten (18,18') aus der Rechnerwolke (16) übermittelt werden, fungiert.

6. Verfahren nach einem der vorangehenden Ansprüche, wobei die Geometriedaten (12,12') bzw. Programmcodedaten im Bereich der Rechnerwolke (16) zum Erhalt der Bewegungsdaten (18,18') bzw. der Daten für ein ausführbares Computerprogramm mit einem homomorphen Algorithmus oder homomorphen Algorithmen bearbeitet werden.

7. Verfahren nach einem der vorangehenden Ansprüche, wobei die Geomtriedaten (12) CAD-Daten eines mit der Bearbeitungsmaschine zu bearbeitenden Werkstücks sind.

8. Computerprogramm mit Programmcode-Mitteln, um alle Schritte von jedem beliebigen der Ansprüche 1 bis 7 durchzuführen, wenn das Programm auf einer Bearbeitungsstation (10) und mindestens einem Rechner in einer Rechnerwolke (16) ausgeführt wird.

9. Digitales Speichermedium mit elektronisch auslesbaren Steuersignalen, die so mit einer Bearbeitungsstation (10) und mindestens einem Rechner in einer Rechnerwolke (16) zusammenwirken können, dass ein Verfahren nach einem der Ansprüche 1 bis 7 ausgeführt wird.

## Geänderte Patentansprüche

### Geänderte Patentansprüche gemäss Regel 137(2) EPÜ.

**1.** Verfahren zum Ermitteln von Bewegungsdaten (18) für eine Bearbeitungsmaschine,
wobei Geometriedaten (12) als Grundlage für eine Bewegung der Bearbeitungsmaschine an einer Bearbeitungsstation (10) lokal verschlüsselt und in eine Rechnerwolke (16) eingespeist werden,
wobei innerhalb der Rechnerwolke (16) die Bewegungsdaten (18') für eine Bewegung der Bearbeitungsmaschine aufgrund der verschlüsselten Geometriedaten (12') ermittelt werden,
wobei die Bewegungsdaten (18') aus der Rechnerwolke (16) an eine Bearbeitungsstation (10) oder die Bearbeitungsstation (10) übermittelt werden und
wobei die Bewegungsdaten (18') an der Bearbeitungsstation mit dem bei der Verschlüsselung der Geometriedaten (12') verwendeten Schlüssel (14) entschlüsselt werden.

**2.** Verfahren nach Anspruch 1, wobei die verschlüsselten Geometriedaten (12') während einer Bearbeitung innerhalb der Rechnerwolke (16) für einen Erhalt der Bewegungsdaten (18') nicht entschlüsselt werden.

**3.** Verfahren nach Anspruch 1 oder 2, wobei der zur Ver- und Entschlüsselung der Geometriedaten (12') verwendete Schlüssel (14) zu keinem Zeitpunkt in die Rechnerwolke (16) übermittelt wird.

**4.** Verfahren nach einem der Ansprüche 1, 2 oder 3, wobei eine Steuerungseinrichtung für eine Bearbeitungsmaschine als Bearbeitungsstation (10), an welche die Bewegungsdaten (18,18') aus der Rechnerwolke (16) übermittelt werden, fungiert.

**5.** Verfahren nach einem der vorangehenden Ansprüche, wobei die Geometriedaten (12,12') im Bereich der Rechnerwolke (16) zum Erhalt der Bewegungsdaten (18,18') mit einem homomorphen Algorithmus oder homomorphen Algorithmen bearbeitet werden.

**6.** Verfahren nach einem der vorangehenden Ansprüche, wobei die Geometriedaten (12) CAD-Daten eines mit der Bearbeitungsmaschine zu bearbeitenden Werkstücks sind.

**7.** Computerprogramm mit Programmcode-Mitteln, um alle Schritte von jedem beliebigen der Ansprüche 1 bis 6 durchzuführen, wenn das Programm auf einer Bearbeitungsstation (10) und mindestens einem Rechner in einer Rechnerwolke (16) ausgeführt wird.

**8.** Digitales Speichermedium mit elektronisch auslesbaren Steuersignalen, die so mit einer Bearbeitungsstation (10) und mindestens einem Rechner in einer Rechnerwolke (16) zusammenwirken können, dass ein Verfahren nach einem der Ansprüche 1 bis 6 ausgeführt wird.
